# EUROPÄISCHE PATENTSCHRIFT

(11) **EP 3 140 167 B1**
(45) Veröffentlichungstag und Bekanntmachung des Hinweises auf die Patenterteilung: **21.03.2018**
(21) Anmeldenummer: 15713474.3
(22) Anmeldetag: 31.03.2015
(51) Int. Cl.: B60T 8/88

(54) **VORRICHTUNG UND VERFAHREN UND ZUM BETREIBEN EINES FAHRZEUGS**
DEVICE AND METHOD FOR OPERATING A VEHICLE
DISPOSITIF ET PROCÉDÉ PERMETTANT DE FAIRE FONCTIONNER UN VÉHICULE

(30) Priorität: 06.05.2014 DE 102014208391
(43) Veröffentlichungstag der Anmeldung: 15.03.2017
(73) Patentinhaber: Robert Bosch GmbH, 70442 Stuttgart (DE)
(72) Erfinder: SAUTTER, Peter, 74348 Lauffen (DE)
(86) Internationale Anmeldenummer: PCT/EP2015/056958
(87) Internationale Veröffentlichungsnummer: WO 2015/169510

(56) Entgegenhaltungen:
- DE-A1-102004 008 935
- GB-A- 2 068 068
- US-A- 4 009 914
- US-A- 5 129 713

## Beschreibung

Die Erfindung betrifft eine Vorrichtung zum Betreiben eines Fahrzeugs. Die Erfindung betrifft ferner ein Verfahren zum Betreiben eines Fahrzeugs. Die Erfindung betrifft des Weiteren ein System zum Betreiben eines Fahrzeugs sowie ein Computerprogramm.

### Stand der Technik

Bei einem automatisierten Fahren des Fahrzeugs muss in der Regel bei einem Ausfall eines Primärbremsregelsystems, zum Beispiel ein ESP (Elektronisches Stabilitätsprogramm), eine Rückfallebene, zum Beispiel ein Sekundärbremssystem, die Fahrzeugverzögerung übernehmen. Es ist wünschenswert, dass bei dieser Fahrzeugverzögerung die Reifen des Fahrzeugs nicht blockieren. Das heißt also insbesondere, dass es wünschenswert ist, dass diese Fahrzeugverzögerung eine Antiblockierfunktion aufweist. Hierfür müssen Radgeschwindigkeitsinformationen, zum Beispiel mindestens zwei Radgeschwindigkeitsinformationen, zur Verfügung stehen. Um unabhängig von dem Primärbremsregelsystem zu sein, ist es bekannt, zusätzlich zu den Drehzahlfühlern für das Primärbremsregelsystem noch zwei weitere Drehzahlfühler zu verwenden. Dies bedeutet einen erhöhten Material- und Montageaufwand.

Eine Antiblockierfunktion mit Notlaufeigenschaften ist z.B. aus dem Dokument GB 2 068 068 A bekannt.

### Offenbarung der Erfindung

Die der Erfindung zugrunde liegende Aufgabe kann darin gesehen werden, eine Vorrichtung zum Betreiben eines Fahrzeugs bereitzustellen, die die bekannten Nachteile überwindet.

Die der Erfindung zugrunde liegende Aufgabe kann auch darin gesehen werden, ein entsprechendes Verfahren zum Betreiben eines Fahrzeugs bereitzustellen.

Die der Erfindung zugrunde liegende Aufgabe kann des Weiteren darin gesehen werden, ein entsprechendes System zum Betreiben eines Fahrzeugs anzugeben.

Die der Erfindung zugrunde liegende Aufgabe kann auch darin gesehen werden, ein entsprechendes Computerprogramm bereitzustellen.

Diese Aufgaben werden mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt wird eine Vorrichtung zum Betreiben eines Fahrzeugs bereitgestellt, umfassend
- eine Koppeleinrichtung, die ausgebildet ist, einen Drehzahlfühler von einer Primärenergieversorgung einer Primärsteuerung eines Primärbremsregelsystems abzukoppeln und an eine Sekundärenergieversorgung anzukoppeln, und
- eine Steuerungseinrichtung, die ausgebildet, die Koppeleinrichtung in Abhängigkeit eines Fehlersignals von der Primärsteuerung zu steuern, so dass bei einem Fehler der Primärsteuerung der Drehzahlfühler von der Primärenergieversorgung abgekoppelt und an die Sekundärenergieversorgung angekoppelt werden kann.

Nach noch einem Aspekt wird ein Verfahren zum Betreiben eines Fahrzeugs bereitgestellt, wobei ein Drehzahlfühler bei einem Fehler in einer Primärsteuerung eines Primärbremsregelsystems von einer Primärenergieversorgung der Primärsteuerung abgekoppelt und an eine Sekundärenergieversorgung angekoppelt wird.

Nach noch einem Aspekt wird ein System zum Betreiben eines Fahrzeugs bereitgestellt, wobei das System die erfindungsgemäße Vorrichtung umfasst sowie eine eine Primärenergieversorgung aufweisende Primärsteuerung für ein Primärbremsregelsystem.

Nach noch einem Aspekt wird ein Computerprogramm bereitgestellt, welches Programmcode zur Durchführung des erfindungsgemäßen Verfahrens umfasst, wenn das Computerprogramm auf einem Computer ausgeführt wird.

Die Erfindung umfasst also insbesondere den Gedanken, bei einem Auftreten eines Fehlers, der durch das Fehlersignal signalisiert wird, in der Primärsteuerung den Drehzahlfühler von der Primärsteuerung, insbesondere von der Primärenergieversorgung der Primärsteuerung, abzukoppeln und an die Sekundärenergieversorgung anzukoppeln. Das heißt also insbesondere, dass im Fehlerfall die Energieversorgung des Drehzahlfühlers nicht mehr durch die Primärenergieversorgung der Primärsteuerung bewirkt ist, sondern mittels der Sekundärenergieversorgung. Die Energieversorgung des Drehzahlfühlers wird also im Fehlerfall unabhängig von der Primärsteuerung bewirkt. Dadurch ist es in vorteilhafter Weise ermöglicht, den Drehzahlfühler auch im Fehlerfall der Primärsteuerung zu betreiben. Das heißt insbesondere, dass der Drehzahlfühler aufgrund dieser unabhängigen Energieversorgung auch im Fehlerfall eine Drehzahl eines Fahrzeugrads messen oder erfassen und entsprechende Drehzahlfühlersignale zur Verfügung oder bereitstellen kann. Basierend auf diesen Drehzahlfühlersignalen kann beispielsweise eine Sekundärsteuerung eines Sekundärbremssystems eine Fahrzeugverzögerung steuern. Da dieser Sekundärsteuerung Drehzahlen eines Fahrzeugrads oder mehrerer Fahrzeugräder zur Verfügung stehen, kann diese beispielsweise in vorteilhafter Weise erkennen, ob ein Fahrzeugrad blockiert oder fast am Blockieren ist. Entsprechend kann also die Sekundärsteuerung basierend auf dem Drehzahlfühlersignal das Sekundärbremssystem so steuern, dass bei einer Fahrzeugverzögerung mittels des Sekundärbremssystems ein Blockieren eines oder mehrerer Fahrzeugräder verhindert oder zumindest verringert wird.

Hierfür kann in vorteilhafter Weise ein bereits vorhandener Drehzahlfühler weiterverwendet werden, der im Normalbetrieb üblicherweise für das Primärbremsregelsystem vorgesehen ist. Es müssen nicht noch zusätzliche Drehzahlfühler eingebaut werden. Der im Rahmen des Primärbremsregelsystems bereits vorhandene Drehzahlfühler kann auch im Fehlerfall weiterverwendet oder weiterbetrieben werden. Das spart in vorteilhafter Weise einen Materialaufwand und eine Montagezeit ein. Das heißt insbesondere, dass eine Radgeschwindigkeit, welche basierend auf dem Drehzahlfühlersignal ermittelt werden kann, für eine externe Rückfallebene (oder Rückfallsystem), hier insbesondere die Sekundärsteuerung des Sekundärbremssystems, zur Verfügung steht, ohne dass zusätzliche Drehzahlfühler benötigt werden.

Nach einer Ausführungsform können mehrere Drehzahlfühler vorgesehen sein. Die Drehzahlfühler können insbesondere gleich oder vorzugsweise unterschiedlich gebildet sein. Ein Drehzahlfühler im Sinne der vorliegenden Erfindung ist insbesondere ausgebildet, eine Drehzahl eines Rads des Fahrzeugs zu messen oder zu erfassen und ein der Drehzahl entsprechendes Drehzahlfühlersignal bereitzustellen. Ausführungsformen im Zusammenhang mit lediglich einem Drehzahlfühler gelten analog für Ausführungsformen hinsichtlich mehrerer Drehzahlfühler und umgekehrt. Ein Drehzahlfühler kann insbesondere als ein Drehzahlsensor bezeichnet werden.

Nach einer Ausführungsform kann vorgesehen sein, dass eine Verstärkereinrichtung zum Verstärken eines Drehzahlfühlersignals und zum Senden des verstärkten Drehzahlfühlersignals an eine Sekundärsteuerung eines Sekundärbremssystems vorgesehen ist, wobei die Koppeleinrichtung ansprechend auf die Steuerung mittels der Steuerungseinrichtung ausgebildet ist, die Verstärkereinrichtung an die Sekundärenergieversorgung anzukoppeln.

Nach einer Ausführungsform kann vorgesehen sein, dass eine Verstärkereinrichtung ein Drehzahlfühlersignal verstärkt und das verstärkte Drehzahlfühlersignal an eine Sekundärsteuerung eines Sekundärbremssystems sendet, wobei beim Fehler (oder im Fehlerfall) die Verstärkereinrichtung an die Sekundärenergieversorgung angekoppelt wird.

Das heißt insbesondere, dass auch im Fehlerfall die Verstärkereinrichtung weiterbetrieben werden kann. Denn auch diese wird im Fehlerfall an die Sekundärenergieversorgung angekoppelt. Beispielsweise kann vorgesehen sein, dass die Verstärkereinrichtung analog zu dem Drehzahlfühler ebenfalls an die Primärenergieversorgung angekoppelt ist. Im Fehlerfall wird die Verstärkereinrichtung von der Primärenergieversorgung vorzugsweise abgekoppelt und an die Sekundärenergieversorgung angekoppelt. Somit kann in vorteilhafter Weise der Sekundärsteuerung auch im Fehlerfall ein verstärktes Drehzahlfühlersignal zur Verfügung gestellt werden.

Wenn im Lichte der vorliegenden Beschreibung von einem "Ankoppeln" geschrieben wird, so sollen damit alle Fälle abgedeckt sein: Ankoppeln des Drehzahlfühlers an die Sekundärenergieversorgung, Ankoppeln der Verstärkereinrichtung an die Sekundärenergieversorgung und Ankoppeln sowohl der Verstärkereinrichtung als auch des Drehzahlfühlers an die Sekundärenergieversorgung. Das gilt analog auch für das "Abkoppeln" sowohl von der Sekundärenergieversorgung als auch von der Primärenergieversorgung.

Nach einer Ausführungsform kann vorgesehen sein, dass die Verstärkereinrichtung ausgebildet ist, auf eine Flanke des Drehzahlfühlersignals zu triggern und entsprechend dieser Triggerung ein Signal mit einem vorbestimmten Pegel, insbesondere ein 12-V-Signal, an die Sekundärsteuerung zu senden.

In einer Ausführungsform triggert die Verstärkereinrichtung auf eine Flanke des Drehzahlfühlersignals und sendet entsprechend dieser Triggerung ein Signal mit einem vorbestimmten Pegel, insbesondere ein 12-V-Signal, an die Sekundärsteuerung.

Nach einer weiteren Ausführungsform kann vorgesehen sein, dass die Verstärkereinrichtung ausgebildet ist, auf einen Pegel des Drehzahlfühlersignals zu triggern und entsprechend dieser Triggerung ein Signal mit einem vorbestimmten Pegel, insbesondere ein 12-V-Signal, an die Sekundärsteuerung zu senden.

In einer Ausführungsform triggert die Verstärkereinrichtung auf einen Pegel des Drehzahlfühlersignals und sendet entsprechend dieser Triggerung ein Signal mit einem vorbestimmten Pegel, insbesondere ein 12-V-Signal, an die Sekundärsteuerung.

Nach einer Ausführungsform kann vorgesehen sein, dass die Verstärkereinrichtung ausgebildet ist, das verstärkte Drehzahlfühlersignal unabhängig von dem Fehlersignal an die Sekundärsteuerung zu senden.

Nach einer weiteren Ausführungsform kann vorgesehen sein, dass die Verstärkereinrichtung das verstärkte Drehzahlfühlersignal unabhängig von dem Fehlersignal an die Sekundärsteuerung sendet.

Das heißt insbesondere, dass selbst im Normalfall oder Normalbetrieb (also wenn kein Fehlersignal vorliegt) der Primärsteuerung die Verstärkereinrichtung das verstärkte Drehzahlfühlersignal an die Sekundärsteuerung sendet. Das heißt insbesondere, dass die Sekundärsteuerung auch dann ein verstärktes Drehzahlfühlersignal empfängt, wenn die Primärsteuerung ordnungsgemäß funktioniert, also kein Fehler vorliegt. Das heißt insbesondere, dass, selbst wenn die Verstärkereinrichtung und/oder der Drehzahlfühler an der Primärenergieversorgung der Primärsteuerung angekoppelt ist respektive sind, die Verstärkereinrichtung das Drehzahlfühlersignal verstärkt und an die Sekundärsteuerung sendet. Dadurch kann in vorteilhafter Weise die Sekundärsteuerung eine Drehzahl unabhängig von der Primärsteuerung überwachen. Dieses Überwachen kann insbesondere mittels eines Vergleichs des verstärkten Drehzahlfühlersignals mit einem Fahrzeuggeschwindigkeitssignal durchgeführt werden.

Nach einer Ausführungsform kann vorgesehen sein, dass eine Sekundärsteuerung vorgesehen ist, die ausgebildet ist, das verstärkte Drehzahlfühlersignal mittels eines Vergleichs des verstärkten Drehzahlfühlersignals mit einem Fahrzeuggeschwindigkeitssignal zu überwachen.

Nach einer Ausführungsform kann vorgesehen sein, dass die Sekundärsteuerung das verstärkte Drehzahlfühlersignal mittels eines Vergleichs des verstärkten Drehzahlfühlersignals mit einem Fahrzeuggeschwindigkeitssignal überwacht.

Zum einen steht also ein Drehzahlfühlersignal zur Verfügung, basierend auf welchem eine Fahrzeuggeschwindigkeit (erster Wert) ermittelt werden kann. Des Weiteren steht unabhängig davon ein Fahrzeuggeschwindigkeitssignal zur Verfügung, welches einer Fahrzeuggeschwindigkeit (zweiter Wert) entspricht. Durch Vergleich dieser beiden Werte (also insbesondere der entsprechenden Signale) kann in vorteilhafter Weise eine Abweichung erkannt werden.

Nach einer weiteren Ausführungsform kann vorgesehen sein, dass die Steuerungseinrichtung ausgebildet ist, die Koppeleinrichtung in Abhängigkeit eines einen automatisierten Fahrbetrieb signalisierenden Automatikbetriebssignals zu steuern, so dass die Koppeleinrichtung nur abkoppelt und entsprechend ankoppelt, wenn zusätzlich zum Fehlerfall ein automatisierter Fahrbetrieb vorliegt.

Nach einer Ausführungsform kann vorgesehen sein, dass nur entsprechend abgekoppelt und entsprechend angekoppelt wird, wenn zusätzlich zum Fehlersignal noch ein Automatikbetriebssignal vorliegt, welches einen automatisierten Fahrbetrieb signalisiert.

Das heißt also insbesondere, dass zwei Bedingungen erfüllt sein müssen, damit der Drehzahlfühler respektive die Verstärkereinheit von der Primärenergieversorgung abgekoppelt werden und an die Sekundärversorgung angekoppelt werden: Zum einen muss ein Fehlersignal vorliegen. Es muss also ein Fehler in der Primärsteuerung aufgetreten sein. Zum anderen muss sich das Fahrzeug in einem automatisierten Fahrbetrieb befinden. Dies signalisiert das Automatikbetriebssignal. Das heißt insbesondere, dass bei einem Vorhandensein oder einem Vorliegen des Automatikbetriebssignals das Fahrzeug sich in einem automatisierten Fahrbetrieb befindet. Ein automatisierter Fahrbetrieb ist insbesondere dadurch gekennzeichnet, dass das Fahrzeug unabhängig von einem Fahrer autonom fährt. Die Fahrzeugführung geschieht unabhängig von dem Fahrer. Durch das Vorhandensein dieser zwei Bedingungen wird in vorteilhafter Weise sichergestellt, dass eine Abkopplung von der Primärenergieversorgung und eine Ankopplung an die Sekundärenergieversorgung nur bei einem Fehler der Primärsteuerung in einem automatisierten Fahrbetrieb des Fahrzeugs durchgeführt werden.

Nach einer weiteren Ausführungsform kann vorgesehen sein, dass die Steuerungseinrichtung ausgebildet ist, die Koppeleinrichtung in Abhängigkeit einer nach dem entsprechenden Ankoppeln an die Sekundärenergieversorgung abgelaufenen Zeit zu steuern, so dass die Koppeleinrichtung von der Sekundärenergieversorgung entsprechend abkoppelt.

Nach einer weiteren Ausführungsform kann vorgesehen sein, dass der Drehzahlfühler und/oder die Verstärkereinrichtung nach ihrem Ankoppeln an die Sekundärenergieversorgung von dieser abgekoppelt werden, wenn nach dem Ankoppeln eine vorbestimmte Zeit abgelaufen ist.

Das heißt insbesondere, dass die Sekundärenergieversorgung die Energieversorgung der Verstärkereinrichtung und/oder des Drehzahlfühlers nur für eine vorbestimmte Zeit übernimmt. Nach Ablauf dieser vorbestimmten Zeit werden die Verstärkereinrichtung und/oder der Drehzahlfühler von der Sekundärenergieversorgung abgekoppelt. Dadurch kann beispielsweise in vorteilhafter Weise sichergestellt werden, dass die Sekundärenergieversorgung nicht ihren kompletten Energiespeicher leert. Dies ist insbesondere relevant, wenn die Sekundärenergieversorgung eine Batterie und/oder einen Akkumulator umfasst. Es kann nach einer Ausführungsform vorgesehen sein, dass die Verstärkereinrichtung und/oder der Drehzahlfühler nach dem entsprechenden Ankoppeln an die Sekundärenergieversorgung von dieser abgekoppelt werden, wenn das Fahrzeug in einen sicheren Zustand geführt wurde und/oder wenn der automatisierte Fahrbetrieb beendet wurde. Letzteres beispielsweise wenn ein Fahrer die Fahrzeugführung wieder übernimmt.

Nach einer Ausführungsform kann vorgesehen sein, dass die Primärsteuerung vorgesehen ist.

Nach einer Ausführungsform kann vorgesehen sein, dass das Primärbremsregelsystem umfassend die Primärsteuerung vorgesehen ist.

Nach einer weiteren Ausführungsform kann vorgesehen sein, dass die Sekundärsteuerung vorgesehen ist.

Nach einer weiteren Ausführungsform kann vorgesehen sein, dass das Sekundärbremssystem umfassend die Sekundärsteuerung vorgesehen ist.

Nach einer Ausführungsform kann vorgesehen sein, dass die Sekundärenergieversorgung eine Batterie und/oder einen Akkumulator umfasst oder als ein soleher respektive solche gebildet ist. Beispielsweise kann es sich bei der Batterie oder dem Akkumulator um eine Fahrzeugbatterie oder einen Fahrzeugakkumulator handeln.

Allgemein stellt eine Energieversorgung im Sinne der vorliegenden, also insbesondere die Primärenergieversorgung und/oder die Sekundärenergieversorgung, elektrische Energie (zum Beispiel: in Form eines elektrischen Stroms und/oder einer elektrischen Spannung) für den Drehzahlfühler respektive die Verstärkereinrichtung zur Verfügung.

Nach einer Ausführungsform kann vorgesehen sein, dass es sich bei dem Primärbremsregelsystem um ein Primärbremsregelsystem aufweisend eine Antiblockierfunktion handelt. Das Primärbremsregelsystem kann beispielsweise ein Antiblockiersystem (ABS) und/oder ein ESP (Elektronisches Stabilitätsprogramm)-System sein respektive umfassen.

Nach einer Ausführungsform kann vorgesehen sein, dass das Sekundärbremssystem einen Bremskraftverstärker umfasst. Der Bremskraftverstärker wird insbesondere mittels der Sekundärsteuerung gesteuert. Insbesondere können mehrere Bremskraftverstärker vorgesehen sein, die mittels der Sekundärsteuerung gesteuert werden können respektive werden. Die Bremskraftverstärker können beispielsweise gleich oder vorzugsweise unterschiedlich gebildet sein. Der Bremskraftverstärker kann beispielsweise ein Unterdruck-Bremskraftverstärker sein. Der Bremskraftverstärker kann beispielweise ein hydraulischer oder ein elektrischer Bremskraftverstärker sein.

Nach einem Aspekt wird ein Fahrzeug bereitgestellt umfassend die erfindungsgemäße Vorrichtung oder das erfindungsgemäße System.

Nach einer Ausführungsform kann vorgesehen sein, dass ein oder mehrere Drehzahlfühler vorgesehen sind. Die Drehzahlfühler sind insbesondere gleich oder vorzugsweise unterschiedlich gebildet.

Ausführungsformen und/oder Funktionalitäten und/oder Merkmale hinsichtlich der Vorrichtung respektive System respektive Verfahren ergeben sich analog aus den entsprechenden Ausführungsformen, Funktionalitäten, Merkmalen hinsichtlich des Verfahrens respektive der Vorrichtung respektive des Systems und umgekehrt in beliebiger Kombination.

Die Erfindung wird im Folgenden anhand von bevorzugten Ausführungsbeispielen näher erläutert. Hierbei zeigen
- Fig. 1: eine Vorrichtung zum Betreiben eines Fahrzeugs,
- Fig. 2: ein Ablaufdiagramm eines Verfahrens zum Betreiben eines Fahrzeugs,
- Fig. 3: ein System zum Betreiben eines Fahrzeugs und
- Fig. 4: eine weitere Vorrichtung zum Betreiben eines Fahrzeugs.

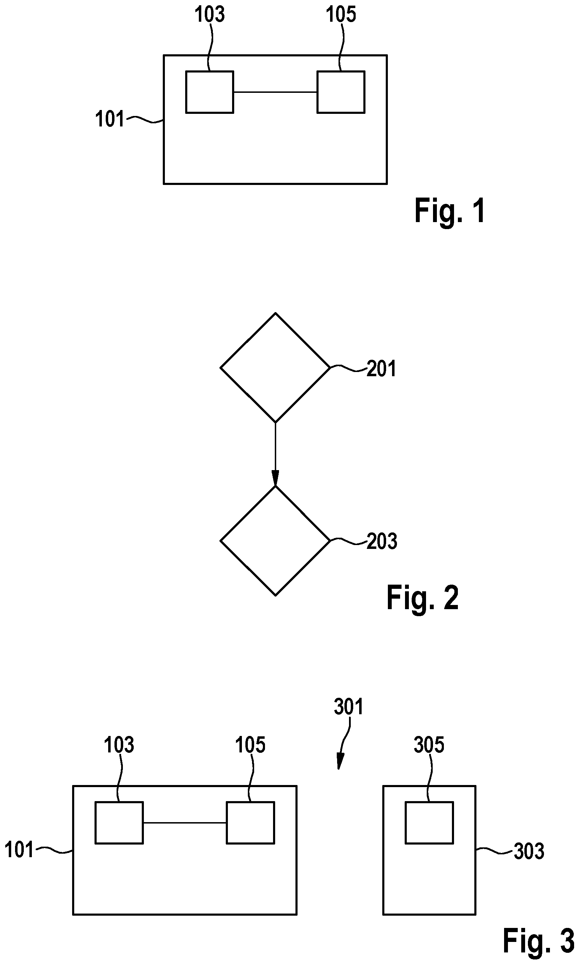

Fig. 1 zeigt eine Vorrichtung 101 zum Betreiben eines Fahrzeugs (nicht gezeigt).

Die Vorrichtung 101 umfasst eine Koppeleinrichtung 103, die ausgebildet ist, einen Drehzahlfühler von einer Primärenergieversorgung einer Primärsteuerung eines Primärbremsregelsystems abzukoppeln und an eine Sekundärenergieversorgung anzukoppeln. Des Weiteren umfasst die Vorrichtung 101 eine Steuereinrichtung 105, die ausgebildet ist, die Koppeleinrichtung 103 in Abhängigkeit eines Fehlersignals von der Primärsteuerung zu steuern, sodass bei einem Fehler der Primärsteuerung der Drehzahlfühler von der Primärenergieversorgung abgekoppelt und an die Sekundärenergieversorgung angekoppelt werden kann.

Fig. 2 zeigt ein Ablaufdiagramm eines Verfahrens zum Betreiben eines Fahrzeugs.

Gemäß einem Schritt 201 wird ein Drehzahlfühler bei einem Fehler in einer Primärsteuerung eines Primärbremsregelsystems von einer Primärenergieversorgung der Primärsteuerung abgekoppelt. Gemäß einem Schritt 203 wird der Drehzahlfühler anschließend an eine Sekundärenergieversorgung angekoppelt.

Fig. 3 zeigt ein System 301 zum Betreiben eines Fahrzeugs (nicht gezeigt).

Das System 301 umfasst die Vorrichtung 101 gemäß Fig. 1. Das System 301 umfasst ferner eine Primärsteuerung 303 für ein Primärbremsregelsystem. Die Primärsteuerung 303 umfasst ferner eine Primärenergieversorgung 305.

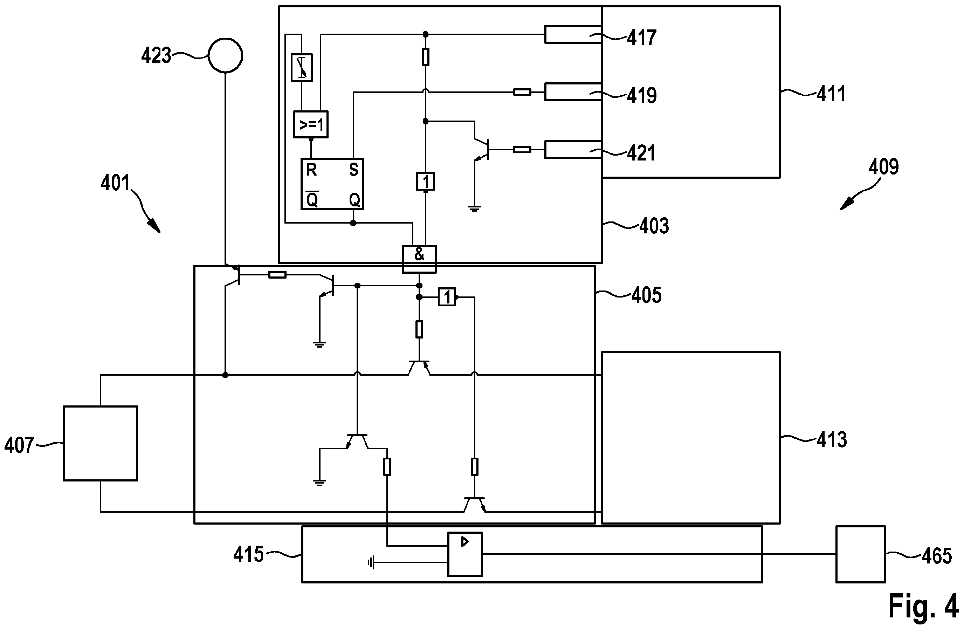

Fig. 4 zeigt eine weitere Vorrichtung 401 zum Betreiben eines Fahrzeugs (nicht gezeigt).

Die Vorrichtung 401 umfasst eine Steuerungseinrichtung 403 sowie eine Koppeleinrichtung 405 und eine Verstärkereinrichtung 415. Ferner ist eine Primärsteuerung 409 für ein Primärbremsregelsystem vorgesehen. Die Primärsteuerung 409 umfasst eine Recheneinheit 411, die basierend auf Drehzahlfühlersignalen eines Drehzahlfühlers 407 eine Verzögerung des Fahrzeugs regeln kann. Die Primärsteuerung 409 umfasst ferner einen im Detail nicht weiter dargestellten Schaltkreis 413 umfassend eine nicht gezeigte Primärenergieversorgung sowie eine nicht gezeigte Auswerteeinheit für die Drehzahlfühlersignale des Drehzahlfühlers 407. Basierend auf den ausgewerteten Drehzahlfühlersignalen wird die Regelung mittels der zentralen Recheneinheit 411 durchgeführt.

Die Bezugszeichen 417, 419, 421 zeigen auf Signale, die die Recheneinheit 411 ausgeben kann. Wenn das Signal 417 auf ein logisches Tief gesetzt wird, so ist dies ein Fehlersignal. Wenn das Signal 419 auf ein logisches Hoch gesetzt wird, so entspricht dies einem Automatikbetriebssignal. Das heißt also insbesondere, dass im automatisierten Fahrbetrieb das Signal 419 auf ein logisches Hoch gesetzt wird. Wenn das Signal 421 auf ein logisches Hoch gesetzt wird, so entspricht dies einem Testsignal, sodass ein Testbetrieb der Vorrichtung 401 durchgeführt werden kann. In einem solchen Testbetrieb wird getestet, ob die Abkopplung des Drehzahlfühlers 407 von der Primärenergieversorgung und das anschließende Ankopplung an eine Sekundärenergieversorgung 423, die beispielsweise eine Fahrzeugbatterie sein kann, funktioniert. In einer nicht gezeigten Ausführungsform kann vorgesehen sein, dass anstelle der vorstehend genannten logischen Pegel ihr entsprechendes gegenteiliger Pendant vorgesehen ist, also anstelle eines logischen Hochs ein logisches Tief und umgekehrt.

In den Elementen 403, 405 und 415 sind zur Veranschaulichung Schaltpläne eingezeichnet, die dem Fachmann bekannte elektronische Bauteile wie zum Beispiel Widerstände und Transistoren aufweisen. Für die elektronischen Bauteile der Schaltpläne sind die üblichen Schaltzeichen verwendet worden. Auf eigene Bezugszeichen wurde daher verzichtet. Mittels der beispielhaften Schaltpläne kann das erfindungsgemäße An/Abkoppeln bewirkt werden. Doch soll sich die Erfindung nicht nur auf die gezeigten Schaltpläne beschränken. Diese sind lediglich beispielhaft, nicht einschränkend. Andere Schaltpläne sind möglich, solange insbesondere die erfindungsgemäße Wirkung (Ab- und Ankoppeln) bewirkt ist.

Die Verstärkereinrichtung 415 verstärkt das Drehzahlfühlersignal und sendet das verstärkte Drehzahlfühlersignal an eine Sekundärsteuerung 465 eines nicht weiter dargestellten Sekundärbremssystems. Die Koppeleinrichtung 405 ist ausgebildet, ansprechend auf die Steuerung mittels der Steuerungseinrichtung 403, die Verstärkereinrichtung 415 an die Sekundärenergieversorgung 423 anzukoppeln. Basierend auf den verstärkten Drehzahlfühlersignalen kann die Sekundärsteuerung 465 eine Fahrzeugverzögerung steuern. Da der Sekundärsteuerung 465 somit Drehzahlen eines Fahrzeugrads oder mehrerer Fahrzeugräder zur Verfügung stehen, kann diese beispielsweise in vorteilhafter Weise erkennen, ob ein Fahrzeugrad blockiert oder fast am Blockieren ist. Entsprechend kann also die Sekundärsteuerung 465 basierend auf dem Drehzahlfühlersignal das Sekundärbremssystem so steuern, dass bei einer Fahrzeugverzögerung mittels des Sekundärbremssystems ein Blockieren eines oder mehrerer Fahrzeugräder verhindert oder zumindest verringert wird.

## Patentansprüche

1. Vorrichtung (101, 401) zum Betreiben eines Fahrzeugs, umfassend
- eine Koppeleinrichtung (103, 405), die ausgebildet ist, einen Drehzahlfühler (407) von einer Primärenergieversorgung (305) einer Primärsteuerung (303, 409) eines Primärbremsregelsystems abzukoppeln und an eine Sekundärenergieversorgung (423) anzukoppeln, und
- eine Steuerungseinrichtung (105, 403), die ausgebildet ist, die Koppeleinrichtung (103, 405) in Abhängigkeit eines Fehlersignals von der Primärsteuerung (303, 409) zu steuern, so dass bei einem Fehler der Primärsteuerung (303, 409) der Drehzahlfühler (407) von der Primärenergieversorgung (305) abgekoppelt und an die Sekundärenergieversorgung (423) angekoppelt werden kann.

2. Vorrichtung (101, 401) nach Anspruch 1, wobei eine Verstärkereinrichtung (415) zum Verstärken eines Drehzahlfühlersignals und zum Senden des verstärkten Drehzahlfühlersignals an eine Sekundärsteuerung (465) eines Sekundärbremssystems vorgesehen ist, wobei die Koppeleinrichtung (103, 405) ansprechend auf die Steuerung mittels der Steuerungseinrichtung (105, 403) ausgebildet ist, die Verstärkereinrichtung (415) an die Sekundärenergieversorgung (423) anzukoppeln.

3. Vorrichtung (101, 401) nach Anspruch 2, wobei die Verstärkereinrichtung (415) ausgebildet ist, das verstärkte Drehzahlfühlersignal unabhängig von dem Fehlersignal an die Sekundärsteuerung (465) zu senden.

4. Vorrichtung (101, 401) nach Anspruch 2 oder 3, umfassend ferner die Sekundärsteuerung (465), welche ausgebildet ist, das verstärkte Drehzahlfühlersignal mittels eines Vergleichs des verstärkten Drehzahlfühlersignals mit einem Fahrzeuggeschwindigkeitssignal zu überwachen.

5. Vorrichtung (101, 401) nach einem der vorherigen Ansprüche, wobei die Steuerungseinrichtung ausgebildet ist, die Koppeleinrichtung (103, 405) in Abhängigkeit eines einen automatisierten Fahrbetrieb signalisierenden Automatikbetriebssignals zu steuern, so dass die Koppeleinrichtung (103, 405) nur abkoppelt und entsprechend ankoppelt, wenn zusätzlich zum Fehlerfall ein automatisierter Fahrbetrieb vorliegt.

6. Vorrichtung (101, 401) nach einem der vorherigen Ansprüche, wobei die Steuerungseinrichtung (105, 403) ausgebildet ist, die Koppeleinrichtung (103, 405) in Abhängigkeit einer nach dem entsprechenden Ankoppeln an die Sekundärenergieversorgung (423) abgelaufenen Zeit zu steuern, so dass die Koppeleinrichtung (103, 405) von der Sekundärenergieversorgung (423) entsprechend abkoppelt.

7. Verfahren zum Betreiben eines Fahrzeugs, wobei ein Drehzahlfühler (407) bei einem Fehler in einer Primärsteuerung (303, 409) eines Primärbremsregelsystems von einer Primärenergieversorgung (305) der Primärsteuerung (303, 409) abgekoppelt und an eine Sekundärenergieversorgung (423) angekoppelt wird.

8. Verfahren nach Anspruch 7, wobei eine Verstärkereinrichtung (415) ein Drehzahlfühlersignal verstärkt und das verstärkte Drehzahlfühlersignal an eine Sekundärsteuerung (465) eines Sekundärbremssystems sendet, wobei beim Fehler die Verstärkereinrichtung (415) an die Sekundärenergieversorgung (423) angekoppelt wird.

9. System (301) zum Betreiben eines Fahrzeugs, umfassend eine Vorrichtung (101, 401) nach einem der Ansprüche 1 bis 6 und eine eine Primärenergieversorgung (305) aufweisende Primärsteuerung (303, 409) für ein Primärbremsregelsystem.

10. Computerprogramm, umfassend Programmcode zur Durchführung des Verfahrens nach Anspruch 7 oder 8, wenn das Computerprogramm auf einem Computer ausgeführt wird.

## Claims

1. Device (101, 401) for operating a vehicle, comprising
- a coupling apparatus (103, 405) which is designed to uncouple a rotational speed sensor (407) from a primary power supply (305) of a primary controller (303, 409) of a primary brake control system and couple it to a secondary power supply (423), and
- a control apparatus (105, 403) which is designed to control the coupling apparatus (103, 405) as a function of a fault signal from the primary controller (303, 409), with the result that in the event of a fault in the primary controller (303, 409) the rotational speed sensor (407) can be uncoupled from the primary power supply (305) and coupled to the secondary power supply (423).

2. Device (101, 401) according to Claim 1, wherein an amplifier apparatus (415) for amplifying a rotational speed sensor signal and for transmitting the amplified rotational speed senor signal to a secondary controller (465) of a secondary brake system is provided, wherein the coupling apparatus (103, 405) is designed to couple the amplifier apparatus (415) to the secondary power supply (423) in response to the control by means of the control apparatus (105, 403).

3. Device (101, 401) according to Claim 2, wherein the amplifier apparatus (415) is designed to transmit the amplified rotational speed sensor signal to the secondary controller (465) independently of the fault signal.

4. Device (101, 401) according to Claim 2 or 3, also comprising the secondary controller (465) which is designed to monitor the amplified rotational speed sensor signal by means of a comparison of the amplified rotational speed sensor signal with a vehicle speed signal.

5. Device (101, 401) according to one of the preceding claims, wherein the control apparatus is designed to control the coupling apparatus (103, 405) as a function of an automatic operating signal which signals an automated driving mode, with the result that the coupling apparatus (103, 405) is uncoupled and correspondingly coupled only if an automated driving mode is present in addition to the fault case.

6. Device (101, 401) according to one of the preceding claims, wherein the control apparatus (105, 403) is designed to control the coupling apparatus (103, 405) as a function of a time which has elapsed after the corresponding coupling to the secondary power supply (423), with the result that the coupling apparatus (103, 405) is correspondingly uncoupled from the secondary power supply (423).

7. Method for operating a vehicle, wherein in the event of a fault in a primary controller (303, 409) of a primary brake control system a rotational speed sensor (407) is uncoupled from a primary power supply (305) of the primary controller (303, 409) and coupled to a secondary power supply (423).

8. Method according to Claim 7, wherein an amplifier apparatus (415) amplifiers a rotational speed signal and transmits the amplified rotational speed sensor signal to a secondary controller (465) of secondary brake system, wherein in the event of a fault the amplifier apparatus (415) is coupled to the secondary power supply (423).

9. System (301) for operating a vehicle, comprising a device (101, 401) according to one of Claims 1 to 6 and a primary controller (303, 409), having a primary power supply (305), for a primary brake control system.

10. Computer program comprising program code for carrying out the method according to Claim 7 or 8 when the computer program is run on a computer.

## Revendications

1. Dispositif (101, 401) pour faire fonctionner un véhicule, comprenant
- un appareil de connexion (103, 405) qui est configuré pour déconnecter un capteur de vitesse de rotation (407) d'une source d'énergie primaire (305) d'une commande primaire (303, 409) d'un système de régulation de freinage primaire et le connecter à une source d'énergie secondaire (423), et
- un appareil de commande (105, 403) qui est configuré pour commander l'appareil de connexion (103, 405) en fonction d'un signal de défaut de la commande primaire (303, 409), de sorte qu'en présence d'un défaut de la commande primaire (303, 409), le capteur de vitesse de rotation (407) peut être déconnecté de la source d'énergie primaire (305) et connecté à la source d'énergie secondaire (423).

2. Dispositif (101, 401) selon la revendication 1, un appareil d'amplification (415) servant à amplifier un signal de capteur de vitesse de rotation et à envoyer le signal de capteur de vitesse de rotation amplifié à une commande secondaire (465) d'un système de freinage secondaire, l'appareil de connexion (103, 405) étant configuré pour, en réaction à la commande au moyen de l'appareil de commande (105, 403), connecter l'appareil d'amplification (415) à la source d'énergie secondaire (423).

3. Dispositif (101, 401) selon la revendication 2, l'appareil d'amplification (415) étant configuré pour envoyer le signal de capteur de vitesse de rotation amplifié à la commande secondaire (465) indépendamment du signal de défaut.

4. Dispositif (101, 401) selon la revendication 2 ou 3, comprenant en outre la commande secondaire (465) qui est configurée pour surveiller le signal de capteur de vitesse de rotation amplifié au moyen d'une comparaison du signal de capteur de vitesse de rotation amplifié avec un signal de vitesse de véhicule.

5. Dispositif (101, 401) selon l'une des revendications précédentes, l'appareil de commande étant configuré pour commander l'appareil de connexion (103, 405) en fonction d'un signal de mode de conduite automatisé qui signale un mode de conduite automatisé, de sorte que l'appareil de connexion (103, 405) ne déconnecte et ne connecte en conséquence qu'en présence d'un mode de conduite automatisé, en plus de la situation de défaut.

6. Dispositif (101, 401) selon l'une des revendications précédentes, l'appareil de commande (105, 403) étant configuré pour commander l'appareil de connexion (103, 405) en fonction d'un temps qui s'est écoulé après la connexion correspondante à la source d'énergie secondaire (423), de sorte que l'appareil de connexion (103, 405) se déconnecte en conséquence de la source d'énergie secondaire (423).

7. Procédé pour faire fonctionner un véhicule, un capteur de vitesse de rotation (407), en présence d'un défaut dans une commande primaire (303, 409) d'un système de régulation de freinage primaire, étant déconnecté d'une source d'énergie primaire (305) de la commande primaire (303, 409) et connecté à une source d'énergie secondaire (423).

8. Procédé selon la revendication 7, un appareil d'amplification (415) amplifiant un signal de capteur de vitesse de rotation et envoyant le signal de capteur de vitesse de rotation amplifié à une commande secondaire (465) d'un système de freinage secondaire, l'appareil d'amplification (415) étant connecté à la source d'énergie secondaire (423) en présence d'un défaut.

9. Système (301) pour faire fonctionner un véhicule, comprenant un dispositif (101, 401) selon l'une des revendications 1 à 6 et une commande primaire (303, 409) pour un système de régulation de freinage primaire, laquelle possède une source d'énergie primaire (305).

10. Programme informatique, comprenant un code de programme pour mettre en oeuvre le procédé selon la revendication 7 ou 8 lorsque le programme informatique est exécuté sur un ordinateur.
